(19) **Europäisches Patentamt European Patent Office Office européen des brevets**

(11) **EP 1 584 951 B1**

(12) **FASCICULE DE BREVET EUROPEEN**

(45) Date de publication et mention de la délivrance du brevet:
**13.08.2008 Bulletin 2008/33**

(51) Int Cl.:
***G01V 11/00*** *(2006.01)*

(21) Numéro de dépôt: **05290408.3**

(22) Date de dépôt: **23.02.2005**

(54) **Procédé, dispositif et produit-programme de simulation stochastique de paléo chenaux ou de paléo structure géologiques**

Verfahren, Apparat und Computerprogramm zur stochastischen Simulation von Paleokanälen oder geologischen Paleostrukturen

Method, apparatus and computer programm for stochastically simulating paleo-channels or geological paleo structures

(84) Etats contractants désignés:
**AT BE BG CH CY CZ DE DK EE ES FI FR GB GR HU IE IS IT LI LT LU MC NL PL PT RO SE SI SK TR**

(30) Priorité: **07.04.2004 FR 0403649**

(43) Date de publication de la demande:
**12.10.2005 Bulletin 2005/41**

(73) Titulaire: **Earth Decision Sciences 54500 Vandoeuvre-les-Nancy (FR)**

(72) Inventeurs:
• **Leflon, Bruno 54000 Nancy (FR)**
• **Gringarten, Emmanuel Houston, TX 77057 (US)**
• **Mallet, Jean-Laurent 54000 Nancy (FR)**

(74) Mandataire: **Laget, Jean-Loup Cabinet LOYER 161 Rue de Courcelles 75017 Paris (FR)**

(56) Documents cités:
**US-A1- 2003 216 897**

• **DATABASE WPI Derwent Publications Ltd., London, GB; AN 2000-627326 XP002306774 SERGEEV A B; SPIVAKOV V V: "Hydrocarbon deposits development" -& RU 2 148 166 C (KINEKS-GEOLOGIYA STOCK CO) 27 avril 2000 (2000-04-27)**
• **VISEUR S.; SHTUKA A.; MALLET J.; GOCAD A.: "New fast, Stochastic, Boolean Simulation of Fluvial Deposits" SOCIETY OF PETROLEUM ENGINEERS, SPE, 27 septembre 1998 (1998-09-27), - 30 septembre 1998 (1998-09-30) pages 697-709, XP002306772**
• **GIUDICELLI C.; MASSONNAT G., ALABERT F.: "Anguille Marine, a Deepsea-Fan Reservoir Offshore Gabon: From Geology Toward History Matching Through Stochastic Modelling" SOCIETY OF PETROLEUM ENGINEERS, SPE, 16 novembre 1992 (1992-11-16), - 18 novembre 1992 (1992-11-18) pages 433-450, XP002306773**

# Description

L'invention est relative à un procédé de simulation stochastique sous contraintes de paléo chenaux ou de paléo structures géologiques associées au voisinage d'un horizon géologique de référence.

L'invention est également relative à un dispositif de simulation stochastique sous contraintes de paléo chenaux ou de paléo structures géologiques associées au voisinage d'un horizon géologique de référence.

L'invention est enfin relative à un produit-programme d'ordinateur pour la simulation stochastique sous contraintes de paléo chenaux ou de paléo structures géologiques associées au voisinage d'un horizon géologique de référence.

En modélisation géologique, on définit habituellement de manière connue l'objet à modéliser par son enveloppe extérieure qui est généralement une surface fermée. La surface de l'objet à modéliser est définie par un ensemble de facettes adjacentes.

Ces techniques de modélisation par facettes adjacentes sont connues sous le nom de « méthodes booléennes » ou encore « méthodes objets » et ne permettent pas de déterminer aisément si un point de l'espace tridimensionnel appartient ou n'appartient pas à l'objet à modéliser : ces difficultés de détermination sont décrites par exemple dans les documents « Holden,L., Hauge, R., Skatem, O. and Skorstad, A., (1998), Modeling of fluvial reservoirs with object models. Math. Geol., V.30, No.5, pp 473-496 » et

« Viseur, S., Shtuka, A. and Mallet J.L., (1998), New Fast Stochastic Boolean Simulation of Fluvial Deposit., SPE Annual Technical Conference and Exhibition, New Orleans, article No. 49281 ».

En outre, la complexité des calculs effectués nécessite un temps de calcul important et une mémoire de calcul disponible importante. Enfin et surtout, ces méthodes ne permettent pas de prendre en compte de sinuosités importantes ; ce qui a pour effet de générer des simulations géologiquement peu réalistes.

Un premier but de l'invention est de perfectionner l'état de la technique connu, en effectuant une paramétrisation préalable d'un horizon géologique de référence H, en vue de générer stochastiquement des paléo chenaux ou des paléo structures géologiques associés au voisinage de cet horizon géologique de référence.

A l'issue de cette paramétrisation décrite par exemple dans les documents « Lévy, B., Mallet, J.L., (1998). Non distorded texture Mapping for sheared triangulated meshes. ACM-SIGGRAPH 1998 Conference Proceedings, Orlando, Florida, pp. 343-352 » et « Mallet, J.L., (2002), Geomodeling. Oxford University Press, New York », tout point P sur l'horizon de référence H est alors caractérisé par un couple (u,v) de coordonnées paramétriques et un triplet (x,y,z) de coordonnées cartésiennes elles même fonction des paramètres (u,v).

Le couple (u,v) caractérise alors la position du point P sur l'horizon de référence H tandis que le triplet (x,y,z) caractérise la position de P dans l'espace géologique. Par la suite, on notera P(u,v) tout point P situé sur l'horizon de référence H et nous dirons que (u,v) est un système de coordonnées paléogéographiques associé à H.

Un deuxième but de l'invention est de simuler stochastiquement en tout point P(u,v) de l'horizon de référence H l'épaisseur algébrique e(u,v) des différents types de sédiments associés à un paléo chenal ou aux paléo structures géologiques au voisinage de H de telle façon que e(u,v) soit positif pour des sédiments situés d'un coté de H et négatifs de l'autre coté.

L'invention a pour objet un procédé de simulation stochastique sous contraintes de paléo chenaux ou de paléo structures géologiques associées au voisinage d'un horizon géologique de référence, comportant les étapes suivantes :

(a) paramétrer l'horizon géologique de référence en lui associant un système paramétrique bidimensionnel de coordonnées paléogéographiques (u,v) ;

(b) construire une fonction de modélisation d(u,v) définissant la direction générale du paléo chenal à simuler de telle façon que, en tout point P(u,v), le vecteur gradient G(u,v) de cette fonction soit approximativement perpendiculaire à la direction d'écoulement du paléo chenal et que la longueur de G(u,v) ne s'annule jamais sur le domaine étudié ;

(c) si nécessaire ajouter une constante à la fonction de modélisation afin de s'assurer que la courbe isovaleur d'équation d(u,v)=0 soit une approximation de l'axe moyen des paléo chenaux à simuler.

(d) construire une fonction aléatoire R(u,v) dite de «perturbation stochastique » de moyenne approximativement nulle et telle que l'une des deux directions principales d'anisotropie de la fonction d'autocorrélation de R(u,v) soit parallèle au gradient G(u,v) de d(u,v) tandis que les portées de corrélation associées à ces deux directions principales d'anisotropie soient des fonctions de la longueur d'onde, de la sinuosité et de l'amplitude des paléo chenaux à simuler;

(e) afin de générer une simulation particulière, tirer au hasard une réalisation équiprobable r(u,v) de la fonction aléatoire R(u,v) dite de perturbation stochastique;

(f) construire la fonction z(u,v) = d(u,v)+r(u,v) dite de modélisation perturbée. (en effet, compte tenu que la fonction aléatoire de perturbation stochastique R(u,v) construite en (d) est approximativement de moyenne nulle, on peut considérer que z(u,v) est une version « perturbée » de d(u,v) dont les maxima et minima locaux vont engendrer des courbes iso-valeur méandriformes pour $z(u,v)$. De plus, compte tenu de (c), on peut considérer que la courbe iso-valeur d'équation $z(u,v)=0$ n'est autre que l'axe méandriforme du chenal modélisé);

(g) utiliser la valeur absolue de $z(u,v)$ pour définir en tout point $P(u,v)$ de l'horizon de référence H une fonction $w(u,v)= |z(u,v)|$ décrivant la topographie de la pseudo vallée associée au paléo chenal simulé ;

(h) utiliser une fonction de transfert pour transformer ladite fonction topographique $w(u,v)$ de la pseudo vallée en épaisseur $e(u,v)$ d'un type de sédiment associée au paléo chenal , ou à l'une des paléo structures géologiques associées à ce paléo chenal , tout en tenant compte des contraintes de dimension et de forme de ces corps géologiques.

Selon d'autres caractéristiques alternatives de l'invention :

- s'il y a un point Q de données situé au voisinage de l'horizon de référence H sur lequel les épaisseurs minimales et maximales de paléo chenal sont connues, alors il suffit de calculer la projection $P(u^*,v^*)$ de Q sur H, puis d'appliquer la fonction inverse de la fonction de transfert sur les épaisseurs.
  On obtient ainsi un ou plusieurs intervalles. Il suffit alors de contraindre chaque réalisation $r(u,v)$ de la fonction de perturbation stochastique $R(u,v)$ de façon à ce que $d(u^*,v^*)+r(u^*,v^*)$ appartienne à l'un de ces intervalles. S'il existe plusieurs points de données sur lesquels l'épaisseur de paléo chenal est contrainte, alors il suffit de répéter la procédure ci-dessus pour chacun de ces points de données.

- la fonction topographique $w(u,v)$ de la pseudo vallée peut être remplacée par une transformation monotone croissante quelconque de la valeur absolue de la fonction de modélisation perturbée $z(u,v)$;

- la fonction de modélisation $d(u,v)$ définissant la direction générale du paléo chenal à simuler est définie par des conditions en des limites approximativement parallèles à la direction générale du paléo chenal à simuler constituée de deux lignes Lg et Ld situées respectivement à gauche et à droite de l'axe moyen des paléo chenaux et entre lesquelles les paléo chenaux doivent être simulés.
  L'espace situé entre les lignes Lg et Ld est appelé « fairway » et, si nécessaire, on peut ajuster les valeurs de la fonction de modélisation $d(u,v)$ de façon que les réalisations de paléo chenaux simulés soient toutes situées à l'intérieur du fairway ainsi défini;

- la courbe iso-valeur $z(u,v) = 0$ peut être extraite et utilisée pour modéliser l'axe principal du paléo chenal simulé.

- il est possible de modéliser la migration latérale et avale de chaque paléo chenal simulé.

La migration latérale est obtenue en remplaçant la fonction de modélisation perturbée $z(u,v)$ par une fonction de modélisation perturbée paramétrée $z_q(u,v) = d(u,v)+qxr(u,v)$, ou q est un paramètre variant entre deux réels (classiquement entre 0 et 1).

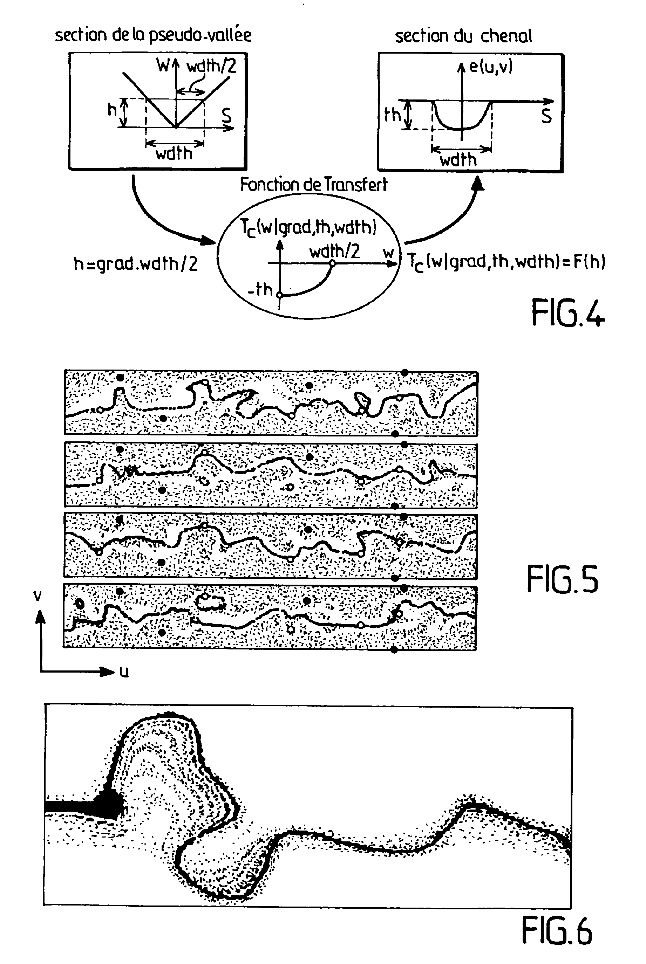

La fonction topographique est alors remplacée par $w^* = \min(|z_q(u,v)|)$ où le minimum est pris par rapport à l'ensemble des valeurs du paramètre q. La migration vers l'aval est obtenue par une transformation progressive de la fonction $r(u,v)$ (la transformation la plus simple étant une translation de r dans la direction d'écoulement du fairway). Les deux migrations peuvent être superposées de façon triviale comme le montre la figure 6.

L'invention a également pour objet un dispositif de simulation stochastique sous contraintes de paléo chenaux ou de paléo structures géologiques associées au voisinage d'un horizon de référence H, comportant :

- des moyens pour paramétrer l'horizon géologique de référence H en lui associant un réseau paramétrique $(u,v)$ bidimensionnel de coordonnées paléogéographiques ;

- des moyens pour construire une fonction de modélisation $d(u,v)$ de la direction générale du paléo chenal à simuler, de telle façon que son gradient ne s'annule jamais sur le domaine d'étude et que la trajectoire moyenne du paléo chenal corresponde approximativement à l'ensemble des points $P(u,v)$ pour lesquels $d(u,v)$ s'annule;

- des moyens pour construire la fonction de perturbation stochastique $R(u,v)$ de telle façon que les directions principales de sa fonction d'autocorrélation soient respectivement parallèles et perpendiculaires au vecteur gradient $G(u,v)$ de la fonction $d(u,v)$ ;

- des moyens pour contraindre $R(u,v)$ à appartenir à un ou plusieurs intervalles donnés en tout point $P(u,v)$ projection sur H d'un point sur lequel l'épaisseur de paléo chenal est connue;

- des moyens pour tirer au hasard une réalisation équiprobable $r(u,v)$ de la fonction de perturbation stochastique $R(u,v)$ ;

- des moyens pour construire la fonction $z(u,v)=d(u,v)+r(u,v)$ ;

- des moyens pour utiliser la valeur absolue $|z(u,v)|$ pour définir en tout point $P(u,v)$ de l'horizon de référence H une fonction $w(u,v)= |z(u,v)|$ décrivant la topographie de la pseudo vallée associée au paléo chenal ;

- des moyens pour utiliser une fonction de transfert pour transformer ladite fonction topographique w(u, v) de la pseudo vallée en l'épaisseur algébrique e(u, v) d'un type de sédiment associée au paléo chenal, ou à l'une des paléo structures géologiques associées à ce paléo chenal , tout en tenant compte des dimensions de ces corps géologiques.

L'invention a enfin pour objet un produit-programme d'ordinateur, comportant des éléments de code de programme pour exécuter les étapes d'un procédé selon l'invention, lorsque ledit programme est exécuté par un ordinateur.

Selon une autre caractéristique alternative de l'invention, un produit-programme comporte des éléments de code de programme pour exécuter les étapes d'un procédé selon l'invention, lorsque ledit programme est installé sur un dispositif selon l'invention.

L'invention sera mieux comprise grâce à la description qui va suivre donnée à titre d'exemple non limitatif en référence aux dessins annexés dans lesquels :

- La figure 1 représente schématiquement un organigramme de mise en oeuvre de l'invention.

- La figure 2 représente schématiquement une étape de paramétrisation d'un horizon de référence, d'un procédé selon l'invention.

- La figure 3 représente schématiquement un exemple de modélisation de pseudo vallée

- La figure 4 représente schématiquement une transformation de pseudo vallée pour l'obtention d'un paléo chenal .

- La figure 5 représente schématiquement un ensemble de quatre simulations équiprobables d'épaisseurs algébriques de sédiments obtenues grâce à l'invention.

- La figure 6 représente schématiquement un exemple de simulation stochastique d'un chenal avec migration latérale et avale.

On sait que les structures géologiques souterraines comportent un ensemble de couches géologiques séparées par des surfaces appelées "horizons".

Un horizon correspond à un ensemble de particules sédimentaires déposées au même temps géologique. Dans le cadre de la présente invention, l'horizon de référence H est supposé avoir été creusé par un paléo chenal qui a ensuite déposé des sédiments d'épaisseur positive situés par convention au dessous de H et d'épaisseur négative situés par convention au dessus de H.

La détermination de la géométrie des horizons et des propriétés des couches géologiques est effectuée à l'aide de procédés de mesures géophysiques et de mesures sur les puits de forage qui sont ensuite traités par des procédés mathématiques appropriés permettant d'obtenir une image de la subsurface. Des procédés mathématiques permettant d'obtenir une image de la subsurface sont par exemple décrits dans le document « Mallet, J.L., (2002), Geomodeling. Oxford University Press, New York ».

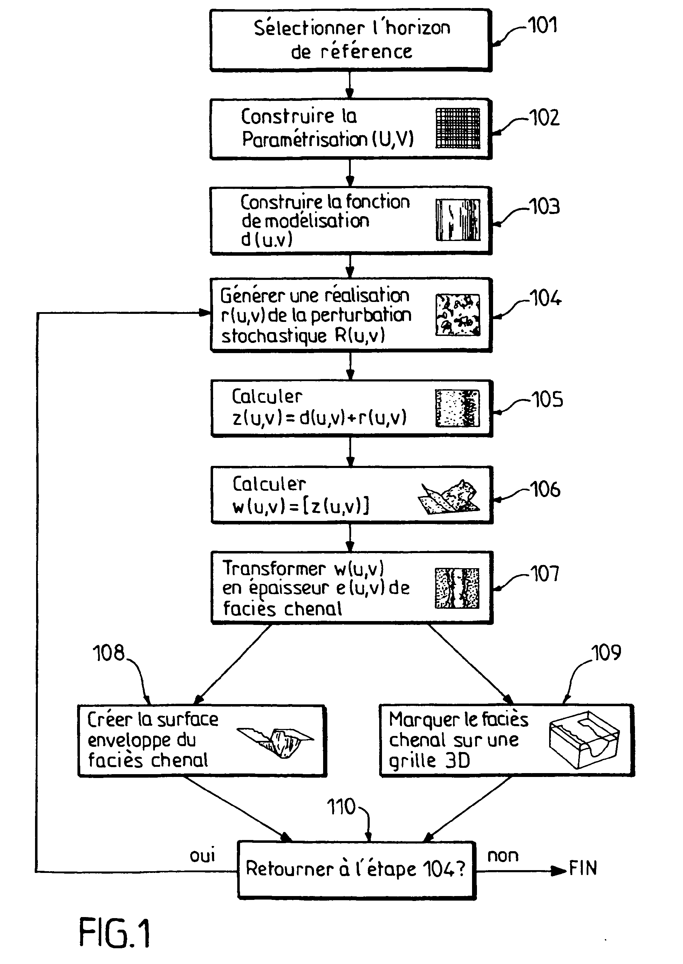

Sur la figure 1, un organigramme illustrant la mise en oeuvre de l'invention comporte plusieurs étapes successives ou simultanées.

A l'étape 101, on choisit un horizon H de référence au voisinage duquel on doit déterminer une structure particulière de sédimentation associée à un paléo chenal et aux structures géologiques associées telles que, par exemple, le faciès chenal, le faciès levées ou le faciès lobes.

A l'étape 102, en utilisant un procédé connu par exemple selon les documents « Lévy, B., Mallet, J.L., (1998). Non distorted texture Mapping for sheared triangulated meshes. ACM-SIGGRAPH 1998 Conference Proceedings, Orlando, Florida, pp. 343-352 » et « Mallet, J.L., (2002), Geomodeling. Oxford University Press, New York », on construit une paramétrisation de l'horizon géologique de référence H choisi à l'étape 101 associant ainsi un couple (u,v) de coordonnées paléogéographiques à tout point P=P(u,v) situé sur l'horizon géologique de référence.

On peut observer que tout point P(u,v) situé au point de coordonnées (x,y,z) dans l'espace géologique tridimensionnel sur l'horizon de référence H à une image P*(u,v) située au point de coordonnées paléogéographiques (u,v) dans l'espace paramétrique bidimensionnel.

En répétant virtuellement l'opération pour tout point P(u,v) de H, on obtient ainsi une image H* de l'horizon de référence dans le plan (u,v) que l'on appelle « domaine paramétrique » de H.

Parmi toutes les paramétrisations possibles de H, de préférence on en choisira une dite « paramétrisation isométrique » selon le document « Mallet, J.L., (2002), Geomodeling. Oxford University Press, New York ».Cette dite « paramétrisation isométrique » est telle que l'image T* sur H* de tout triangle T sur H soit la moins déformée possible.

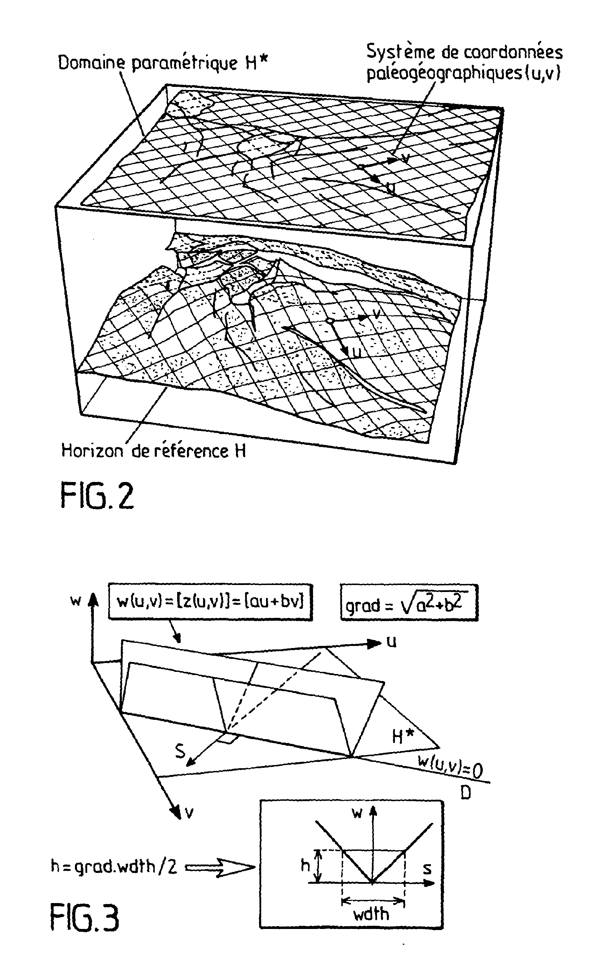

Comme le montre la figure 2, on peut considérer que le plan bidimensionnel supportant le domaine paramétrique H* est un plan horizontal et que H* est une bonne image de l'horizon H au moment du dépôt des sédiments avant que tout évènement tectonique vienne plier et failler H.

Sur la figure 2, on a représenté l'horizon géologique de référence H et son domaine paramétrique H* associé. On notera sur cette figure que l'image d'une droite continue d'équation u=constante dans le domaine paramétrique H* est une courbe tracée sur l'horizon géologique de référence H qui peut être éventuellement coupée par les failles. Une remarque analogue peut être formulée pour l'image d'une droite continue d'équation v=constante dans le domaine paramétrique H*. De nombreux procédés de paramétrisation ont été développés et sont décrits notamment dans le document « Mallet, J.L, Geomodeling, Oxford University Press, New York, (2002) ».

A l'étape 103, on définit en tout point (u,v) du domaine paramétrique H* une fonction de modélisation représentative de la direction générale d(u,v) du paléo chenal à simuler de telle façon que les courbes iso-valeurs de cette fonction soient approximativement parallèles à la direction générale d'écoulement du paléo chenal et que la longueur de son gradient G(u,v) ne s'annule jamais sur le domaine étudié.

Pour ce faire, on peut par exemple :

- choisir la géométrie de deux courbes ouvertes Lg et Ld ne s'intersectant pas et situées de part et d'autre de l'axe principal des paléo chenaux à simuler ;

- construire d(u,v) par interpolation des points situés sur Lg avec une valeur (+V) et des points situés sur Ld avec une valeur (-V), où V est une constante arbitrairement choisie.

En procédant ainsi, d(u,v) apparaît comme une espèce de « distance signée » entre le point P(u,v) situé sur l'horizon de référence et l'axe du paléo chenal, le signe de d(u,v) étant (par exemple) positif si P(u,v) est situé à droite du paléo chenal et négatif sinon.

A l'étape 104, on définit la fonction aléatoire R(u,v) dite de perturbation stochastique de telle façon que les directions principales de la fonction d'autocorrélation de R(u,v) soient respectivement parallèles et perpendiculaires au gradient G(u,v) de d(u,v) tandis que les distances de corrélation associées soient fonction de la longueur d'onde, de la sinuosité et de l'amplitude des paléo chenaux à simuler. On génère ensuite aléatoirement de façon équiprobable une réalisation r(u,v) de la fonction aléatoire R(u,v) de telle façon que r(u,v) soit contraint à appartenir à des intervalles donnés en tout point P(u,v) projection sur H d'un point sur lequel l'épaisseur du faciès paléo chenal est donnée approximativement.

L'invention peut être mise en oeuvre de manière simple à l'aide de techniques connues en utilisant pour générer les réalisations équiprobables de R(u,v), par exemple, une simulation gaussienne séquentielle (SGS). On trouvera une description de ces méthodes pour générer les réalisations équiprobables de fonction aléatoire dans l'ouvrage « Deutsch, C.V., Journel, A., Geostatistical Software Library and Users's Guide, Oxford University Press, New York », (1998) » ou bien l'ouvrage « Mallet, J.L, Geomodeling, Oxford University Press, New York, (2002) ».

A l'étape 105, la fonction non aléatoire z(u,v) = d(u,v) + r(u,v) est construite par addition de la fonction d(u,v) construite à l'étape 103 et de la fonction r(u,v) générée à l'étape 104. Si nécessaire, on peut extraire la courbe iso-valeur z(u,v)=0 pour modéliser l'axe du chenal simulé.

A l'étape 106, on utilise la valeur absolue |z(u,v)| de la fonction z(u,v) calculée à l'étape 105 pour définir en tout point P(u,v) de l'horizon de référence H une fonction non aléatoire w(u,v)= |z(u,v)| décrivant la topographie d'une pseudo vallée associée au paléo chenal que l'on est en train de construire.

A l'étape 107, on utilise une fonction de transfert Tc(w | grad,th,wdth) appropriée pour transformer la fonction w(u,v) calculée à l'étape 106 en une épaisseur algébrique e(u,v) de paléo chenal de telle façon que :

$$e(u,v) = Tc(\ w(u,v)\ |\ grad,th,wdth\ )$$

La fonction de transfert Tc(w | grad,th,wdth) est, par exemple, choisie de telle façon que e(u,v) soit positive en tout point P(u,v) de l'horizon de référence H où il y a du faciès chenal au dessous de H et égale à zéro partout ailleurs. En pratique, la fonction de transfert Tc(w | grad, th,wdth) doit tenir compte localement de la longueur « grad(u,v) » du vecteur gradient G(u,v) de la fonction d(u,v), ainsi que de l'épaisseur moyenne th=th(u,v) et de la largeur moyenne wdth(u,v) du paléo chenal à simuler. Pour simuler les épaisseurs de lobes ou de levées, on remplacera la fonction de transfert Tc(w | grad,th,wdth) présentée ci-dessus par d'autres fonctions de transfert appropriées.

A l'étape 108, on utilise ces épaisseurs e(u,v) pour créer une surface correspondant à l'enveloppe du faciès chenal située dans l'espace géologique tridimensionnel à une distance |e(u,v)| de l'horizon de référence H.

A l'étape 109, on peut également utiliser ces épaisseurs e(u,v) pour marquer comme appartenant au faciès paléo chenal tous les points Q de l'espace géologique tridimensionnel situés au dessous de l'horizon de référence H et dont la projection P(u,v) sur H est située à une distance inférieure ou égale à la valeur absolue de l'épaisseur de sédiment |e(u,v)|.

A l'étape 110, on peut choisir de retourner à l'étape 104 pour générer aléatoirement une nouvelle réalisation de la fonction aléatoire R(u,v) ce qui aura pour effet de produire à l'étape 108 une nouvelle occurrence équiprobable d'épaisseur de faciès paléo chenal dans l'espace géologique.

Afin d'aider à la compréhension du procédé de simulation stochastique d'un paléo chenal suivant la présente invention, nous présentons sur les figures 3 et 4 un exemple extrêmement simplifié correspondant au cas très particulier où :

La fonction de modélisation d(x,y) représentée sur la figure 3 est linéaire et a pour équation d(u,v) = au+bv. Le gradient G(u,v) est donc un vecteur qui a pour composantes (a,b) dans le domaine paramétrique H* et son module « grad » est constant et égal à la racine carrée de $(a^2+b^2)$. De plus, la direction principale de paléo chenal est alors celle correspondant au vecteur de composantes (-b,a) dans le domaine paramétrique H*.

Par simplification, la fonction aléatoire de perturbation R(u,v) est supposée constamment égale à zéro. Ceci a pour effet que, dans ce cas très particulier, la fonction w(u,v) est telle que w(u,v)=|d(u,v)|.

Comme on peut le voir sur la figure 3, sous les hypothèses simplificatrices précédentes, le graphe de la fonction w(u,v) a la forme d'une pseudo vallée rectiligne parallèle à la direction (-b,a). On peut alors imaginer remplir cette pseudo vallée avec du faciès paléo chenal jusqu'à une hauteur h=grad*wdth/2 où grad est le gradient constant de d(u,v) tandis que wdth est la largeur moyenne souhaitée pour le paléo chenal .

Le paléo chenal ainsi généré a la bonne largeur wdth mais possède une épaisseur h et une forme de section généralement inadéquates. Afin de pallier cet inconvénient, comme indiqué sur la figure 4, on applique une fonction de transfert e(u,v)=Tc(w(u,v)|grad,th,wdth) choisie de façon à tenir compte à la fois de la forme des sections et de l'épaisseur souhaitées.

Si maintenant on suppose que la fonction aléatoire de perturbation R(u,v) n'est plus identiquement nulle, alors chaque réalisation r(u,v) de celle-ci engendre des déformations qui rendent la pseudo vallée sinueuse. Les paramètres définissant la fonction d'autocorrélation de R(u,v) peuvent alors être choisis en fonction de la sinuosité, de la longueur d'onde et de l'amplitude des paléo chenaux à simuler. De plus, les contraintes appliquées à R(u,v) permettent de contraindre le paléo chenal à passer par les points où l'on souhaite qu'il passe et à ne pas passer par les points où on souhaite qu'il ne passe pas.

On trouvera ainsi sur la figure 5 un exemple montrant une série équiprobable de paléo chenaux simulés et respectant tous les mêmes contraintes.

La généralisation de l'exemple décrit en référence aux figures 3, 4 et 5 permet ainsi de déterminer toute une série de géométries équiprobables pour un paléo chenal et ses accidents géologiques associés sous les contraintes suivantes :

- le paléo chenal calculé doit passer par des points de données correspondant à des coordonnées paléogéographiques (u,v) données aux emplacements desquels le paléo chenal a été observé ;

- le paléo chenal calculé ne doit pas passer par des points de coordonnées paléogéographiques (u,v) données aux emplacements desquels on a observé que le paléo chenal n'est pas présent et que le paléo chenal doit éviter ;

- le paléo chenal doit correspondre à une certaine sinuosité définie par une sinuosité moyenne, une longueur d'onde moyenne et une amplitude moyenne des méandres ;

- le paléo chenal doit présenter une direction générale correspondant aux lignes iso-valeurs de la fonction de modélisation d(u,v);

- le paléo chenal et les corps associés doivent présenter une épaisseur moyenne prédéterminée ou inférieure à une valeur prédéterminée ;

- le paléo chenal et les corps associés doivent présenter une largeur moyenne prédéterminée ou inférieure à une largeur moyenne prédéterminée.

Il est important de noter que la méthode présentée pour générer stochastiquement des simulations équiprobables de paléo chenaux peut être étendue de façon à modéliser les corps géologiques associés à ces paléo chenaux tels que, par exemple, les lobes et les levées. Pour ce faire, il suffit de choisir une fonction de transfert T appropriée dont l'application à chaque fonction w(u,v) donnera l'épaisseur algébrique e(u,v)=T(w(u, v)) des sédiments correspondant à ces corps géologiques.

Sur la figure 5, un ensemble de quatre réalisations équiprobables de l'épaisseur du faciès chenal sont représentées par niveaux de gris. En ces réalisations équiprobables, on peut constater la présence de points blancs aux emplacements où le paléo chenal doit passer, et de points noirs aux emplacements que le paléo chenal doit éviter. Ces quatre réalisations équiprobables sont représentées dans cet exemple selon une direction générale parallèle à l'axe u : l'invention s'étend bien entendu à toute orientation de direction générale indépendante des axes u ou v.

En référence à la figure 6, on modélise les migrations latérale et avale de chaque paléo chenal simulé. Les deux migrations latérale et avale sont ensuite superposées de façon triviale sur la figure 6.

La migration latérale est obtenue en remplaçant la fonction de modélisation perturbée z(u,v) par une fonction de modélisation perturbée paramétrée $z_q(u,v) = d(u,v)+qxr(u,v)$, ou q est un paramètre variant entre deux réels (classiquement entre 0 et 1). La fonction topographique est alors remplacée par $w^* = min(|z_q(u,v)|)$ où le minimum est pris par rapport à l'ensemble des valeurs du paramètre q. La migration vers l'aval est obtenue par une transformation progressive de la fonction r(u,v) (la transformation la plus simple étant une translation de r dans la direction d'écoulement du fairway).

Un avantage important de l'invention est de pouvoir présenter plusieurs réalisations équiprobables de paléo chenal , ainsi que des bras morts ou des méandres fermés ou recoupés sur eux-mêmes. L'invention apporte ainsi des avantages considérables par rapport à l'état de la technique antérieure, laquelle ne permet ni de modéliser ni de simuler simplement ce type d'objet géologique.

L'invention décrite en référence à un mode de réalisation particulier n'y est nullement limitée, et peut être mis en oeuvre à l'aide d'un dispositif programmable, ou à l'aide d'un dispositif de type connu incorporant un produit-programme d'ordinateur mettant en oeuvre un procédé selon l'invention.

## Revendications

1. Procédé de simulation stochastique sous contraintes de paléo chenaux ou de paléo structures géologiques associés au voisinage d'un horizon géologique de référence H, comportant les étapes suivantes :

   (a) paramétrer l'horizon géologique de référence H au voisinage d'un horizon H de référence en lui associant un réseau paramétrique (u,v) bidimensionnel de coordonnées paléogéographiques ;
   (b) définir une fonction de modélisation d(u,v) de la direction générale du paléo chenal à simuler, de sorte que d(u,v) s'annule sur l'axe moyen des paléo chenaux à simuler ;
   (c) construire une fonction de modélisation perturbée z(u,v)=d(u,v)+r(u,v), où r(u,v) est une réalisation équiprobable d'une fonction aléatoire de perturbation stochastique R(u,v) ;
   (d) utiliser la valeur absolue de ladite fonction de modélisation perturbée z(u,v) de la direction générale du paléo chenal à simuler, pour définir une fonction topographique de pseudo vallée w(u,v)=|z(u,v)|;
   (e) transformer en épaisseur de sédiment e(u,v) ladite fonction topographique de pseudo vallée w(u,v) en utilisant une fonction de transfert choisie de façon à respecter les dimensions moyennes et les caractéristiques de forme du paléo chenal à simuler ou/et des paléo structures géologiques associées à ce paléo chenal .

2. Procédé selon la revendication 1, dans lequel la fonction topographique w(u,v) de la pseudo vallée est remplacée par une transformation monotone croissante quelconque de la valeur absolue de la fonction de modélisation perturbée z(u,v).

3. Procédé selon la revendication 1 ou la revendication 2, dans lequel les contraintes de simulation stochastique comprennent un ensemble de points par lesquels le paléo chenal à simuler doit passer et un ensemble de points par lesquels le paléo chenal ne doit pas passer.

4. Procédé selon l'une quelconque des revendications précédentes, dans lequel la fonction de modélisation d(u,v) définissant la direction générale du paléo chenal à simuler est définie par des conditions en des limites approximativement parallèles à la direction générale du paléo chenal à simuler.

5. Procédé selon l'une quelconque des revendications précédentes, dans lequel la fonction de modélisation de la direction générale du paléo chenal à simuler est définie par des conditions en des limites sensiblement parallèles à la direction générale du paléo chenal à simuler.

6. Procédé selon l'une quelconque des revendications précédentes, dans lequel les directions locales d'anisotropie de la fonction de corrélation de la fonction de perturbation stochastique sont respectivement parallèle et perpendiculaire à la direction générale du paléo chenal à simuler.

7. Dispositif de simulation stochastique sous contraintes de paléo chenaux ou de paléo structures géologiques associées au voisinage d'un horizon H de référence, comportant des moyens pour paramétrer l'horizon géologique de référence H en lui associant un réseau paramétrique (u,v) bidimensionnel de coordonnées paléogéographiques; des moyens pour définir une fonction de modélisation d(u,v) de la direction générale du paléo chenal à simuler, de sorte que d(u,v) s'annule sur l'axe moyen des paléo chenaux à simuler ; des moyens pour construire une fonction de modélisation perturbée z(u,v) = d(u,v) + r(u,v), ou r(u,v) est une réalisation equi propable d'une fonction aléatoire de perturbation stochastique; des moyens pour utiliser la valeur absolue de ladite fonction de modélisation perturbée de la direction générale du paléo chenal à simuler pour définir une fonction topographique de pseudo vallée ; et des moyens pour transformer ladite fonction topographique de pseudo vallée à l'aide d'une fonction de transfert permettant de contraindre les dimensions et les caractéristiques de forme du paléo chenal à simuler ou/et des paléo structures géologiques associées à ce paléo chenal.

8. Dispositif selon la revendication 7, comportant des moyens de mémorisation de contraintes de simulation stochastique , des moyens de calcul et de paramétrisation, et des moyens d'affichage et de visualisation des dimensions et des caractéristiques de forme des paléo chenaux à simuler et/ou des paléo structures géologiques associées à ces paléo chenaux.

9. Produit-programme d'ordinateur, comportant des éléments de code de programme pour exécuter les étapes du procédé selon l'une quelconque des revendications 1 à 6, lorsque ledit programme est exécuté par un ordinateur.

10. Produit-programme d'ordinateur selon la revendication 9 ledit programme étant adapté pour être installé sur un dispositif selon la revendication 7 ou la revendication 8.

## Claims

1. Process for constrained stochastic simulation of palæochannels or associated geological palæostructures in the vicinity of a geological reference horizon H, comprising the following stages:

   (a) parameterising the geological reference horizon H in the vicinity of a reference horizon H by associating a two-dimensional parametric net (u,v) of palæogeographic coordinates therewith;
   (b) defining a modelling function d(u,v) of the general direction of the palæochannel to be simulated in such a way that d(u,v) is zero on the centreline of the palæochannels to be simulated;
   (c) constructing a perturbed modelling function z(u,v) = d(u,v) + r(u,v), where r(u,v) is an equiprobable realisation of a random stochastic perturbation function R(u,v);
   (d) using the absolute value of said perturbed modelling function z(u,v) of the general direction of the palæochannel to be simulated to define a topographical pseudo-valley function w(u,v) = |z(u,v)|;
   (e) transforming said topographical pseudo-valley function w(u,v) into a sediment thickness e(u,v) by using a transfer function which has been chosen in such a way as to satisfy the mean dimensions and shape characteristics of the palæochannel to be simulated and/or of the geological palæostructures associated with this palæochannel.

2. Process according to claim 1, wherein the topographical pseudo-valley function w(u,v) is replaced by any monotonic increasing transformation of the absolute value of the perturbed modelling function z(u,v).

3. Process according to either claim 1 or claim 2, wherein the stochastic simulation constraints comprise a set of points through which the palæochannel to be simulated must pass and a set of points through which the palæochannel must not pass.

4. Process according to any one of the preceding claims, wherein the modelling function d(u,v) defining the general direction of the palæochannel to be simulated is defined by conditions at limits which are approximately parallel to the general direction of the palæochannel to be simulated.

5. Process according to any one of the preceding claims, wherein the modelling function of the general direction of the palæochannel to be simulated is defined by conditions at limits which are substantially parallel to the general direction of the palæochannel to be simulated.

6. Process according to any one of the preceding claims, wherein the local directions of anisotropy of the correlation function of the stochastic perturbation function are respectively parallel and perpendicular to the general direction of the palæochannel to be simulated.

7. Device for constrained stochastic simulation of palæochannels or associated geological palæostructures in the vicinity of a reference horizon H, comprising means for parameterising the geological reference horizon H by associating a two-dimensional parametric net (u,v) of palægeographic coordinates therewith; means for defining a modelling function d(u,v) of the general direction of the palæochannel to be simulated in such a way that d(u,v) becomes zero on the centreline of the palæochannels to be simulated; means for constructing a perturbed modelling function z(u,v) = d(u,v) + r(u,v), where r(u,v) is an equiprobable realisation of a random stochastic perturbation function; means for using the absolute value of said perturbed modelling function of the general direction of the palæochannel to be simulated to define a topographical pseudo-valley function; and means for transforming said topographical pseudo-valley function using a transfer function which makes it possible to constrain the dimensions and shape characteristics of the palæochannel to be simulated and/or of the geological palæostructures associated with said palæochannel.

8. Device according to claim 7, comprising means for storing stochastic simulation constraints, computation and parameterisation means, and means for displaying and visualising the dimensions and shape characteristics of the palæochannel to be simulated and/or the geological palæostructures associated with these palæochannels.

9. Computer program package, comprising program code elements for executing the stages of the process according to any one of claims 1 to 6 when said program is run by a computer.

10. Computer program package according to claim 9, said program being suitable for installation on a device according to either claim 7 or claim 8.

**Patentansprüche**

1. Verfahren zur eingeschränkten stochastischen Simulation von Paläokanälen oder geologischen Paläostrukturen, die der Umgebung eines geologischen Referenzhorizontes H zugeordnet sind, mit folgenden Schritten:

   (a) Parametrisieren des geologischen Referenzhorizontes H in der Umgebung eines Referenzhorizontes H, indem diesem ein zweidimensionales Parameternetz (u,v) von paläogeographischen Koordinaten zugeordnet wird,
   (b) Festlegen einer Modellierfunktion d(u,v) für die Hauptrichtung des zu simulierenden Paläokanals dergestalt, daß sich d(u,v) auf der Mittelachse der zu simulierenden Paläokanäle aufhebt,
   (c) Konstruieren einer gestörten Modellierfunktion z(u,v)=d(u,v) + r(u,v), wobei r(u,v) eine gleichwahrscheinliche Realisation einer stochastischen Zufalls-Störfunktion R(u,v) ist,
   (d) Verwenden des Absolutwertes der gestörten Modellierfunktion z(u,v) für die Hauptrichtung des zu simulierenden Paläokanals, um eine topographische Pseudo-Tal-Funktion w(u,v) = |z(u,v)| festzulegen,
   (e) Umwandeln der topographischen Pseudo-Tal-Funktion w(u,v) in eine Sedimentdicke e(u,v) unter Anwendung einer Überführungsfunktion, die so gewählt ist, daß die mittleren Abmessungen und die Formmerkmale des zu simulierenden Paläokanals oder/und der diesem Paläokanal zugeordneten geologischen Paläostrukturen eingehalten werden.

2. Verfahren nach Anspruch 1, bei dem die topographische Pseudo-Tal-Funktion w(u,v) durch eine beliebige monotone, ansteigende Transformation des Absolutwertes der gestörten Modellierfunktion z(u,v) ersetzt wird.

3. Verfahren nach Anspruch 1 oder Anspruch 2, bei dem die Einschränkungen der stochastischen Simulation eine Gruppe von Punkten, durch die der zu simulierende Paläokanal laufen muß, und eine Gruppe von Punkten umfassen, durch die der Paläokanal nicht laufen darf.

4. Verfahren nach einem der vorhergehenden Ansprüche, bei dem die Modellierfunktion d(u, v), welche die Hauptrichtung des zu simulierenden Paläokanals festlegt, durch Bedingungen innerhalb annähernd parallel zur Hauptrichtung des zu simulierenden Paläokanals verlaufender Grenzen festgelegt ist.

5. Verfahren nach einem der vorhergehenden Ansprüche, bei dem die Modellierfunktion für die Hauptrichtung des zu simulierenden Paläokanals durch Bedingungen innerhalb parallel zur Hauptrichtung des zu simulierenden Paläokanals verlaufender Grenzen festgelegt ist.

6. Verfahren nach einem der vorhergehenden Ansprüche, bei dem die lokalen Anisotropie-Richtungen der Korrelationsfunktion der stochastischen Störfunktion jeweils parallel bzw. senkrecht zur Hauptrichtung des zu simulierenden Paläokanals verlaufen.

7. Vorrichtung zur eingeschränkten stochastischen Simulation von Paläokanälen oder geologischen Paläostrukturen, die der Umgebung eines Referenzhorizontes H zugeordnet sind, mit: Mitteln zum Parametrisieren des geologischen Referenzhorizontes H, indem diesem ein zweidimensionales Parameternetz (u,v) von paläogeographischen Koordinaten zugeordnet wird, Mitteln zum Festlegen einer Modellierfunktion d(u,v) für die Hauptrichtung des zu simulierenden Paläokanals dergestalt, daß sich d(u,v) auf der Mittelachse der zu simulierenden Paläokanäle aufhebt, Mitteln zum Konstruieren einer gestörten Modellierfunktion z(u,v) = d(u,v) + r(u,v), wobei r(u,v) eine gleichwahrscheinliche Realisation einer stochastischen Zufalls-Störfunktion ist, Mitteln zum Verwenden des Absolutwertes der gestörten Modellierfunktion für die Hauptrichtung des zu simulierenden Paläokanals, um eine topographische Pseudo-Tal-Funktion festzulegen, und Mitteln zum Umwandeln der topographischen Pseudo-Tal-Funktion mit Hilfe einer Transferfunktion, mit der die Abmessungen und die Formmerkmale des zu simulierenden Paläokanals oder/und der diesem Paläokanal zugeordneten geologischen Paläostrukturen eingeschränkt werden können.

8. Vorrichtung nach Anspruch 7, mit Mitteln zum Speichern von Einschränkungen einer stochastischen Simulation, mit Rechen- und Parametrisierungsmitteln und mit Mitteln zur Anzeige und Visualisierung der Abmessungen und Formmerkmale der zu simulierenden Paläokanäle und/oder der diesen Paläokanälen zugeordneten geologischen Paläostrukturen.

9. Computerprogrammprodukt mit Programmcodeelementen zum Ausführen der Verfahrensschritte von einem der Ansprüche 1 bis 6, wenn das Programm auf einem Computer ausgeführt wird.

10. Computerprogrammprodukt nach Anspruch 9, wobei das Programm zum Installieren auf einer Vorrichtung nach Anspruch 7 oder 8 angepaßt ist.

Sélectionner l'horizon de référence — 101

Construire la Paramétrisation (U,V) — 102

Construire la fonction de modélisation d(u,v) — 103

Générer une réalisation r(u,v) de la perturbation stochastique R(u,v) — 104

Calculer z(u,v) = d(u,v)+r(u,v) — 105

Calculer w(u,v) = [z(u,v)] — 106

Transformer w(u,v) en épaisseur e(u,v) de faciès chenal — 107

108 — Créer la surface enveloppe du faciès chenal

109 — Marquer le faciès chenal sur une grille 3D

110 — oui   Retourner à l'étape 104?   non → FIN

FIG.1

Domaine paramétrique H*

Système de coordonnées
paléogéographiques (u,v)

Horizon de référence H

# FIG.2

$w(u,v) = [z(u,v)] = [au + bv]$

$grad = \sqrt{a^2 + b^2}$

$w(u,v) = 0$

$h = grad.wdth/2 \Longrightarrow$

# FIG.3

EP 1 584 951 B1

section de la pseudo-vallée

section du chenal

Fonction de Transfert

$T_C(w|grad,th,wdth)$

$h = grad.wdth/2$

$T_C(w|grad,th,wdth) = F(h)$

**FIG.4**

**FIG.5**

**FIG.6**

12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **HOLDEN,L. ; HAUGE, R. ; SKATEM, O. ; SKORSTAD, A.** Modeling of fluvial reservoirs with object models. *Math. Geol.,* 1998, vol. 30 (5), 473-496
- New Fast Stochastic Boolean Simulation of Fluvial Deposit. **VISEUR, S. ; SHTUKA, A. ; MALLET J.L.** SPE Annual Technical Conference and Exhibition. 1998
- **« LÉVY, B. ; MALLET, J.L.** Non distorted texture Mapping for sheared triangulated meshes. *ACM-SIGGRAPH 1998 Conference Proceedings,* 1998, 343-352
- **MALLET, J.L.** Geomodeling. Oxford University Press, 2002
- **LÉVY, B. ; MALLET, J.L.** Non distorted texture Mapping for sheared triangulated meshes. *ACM-SIGGRAPH 1998 Conference Proceedings,* 1998, 343-352
- **MALLET, J.L.** Geomodeling. Oxford University Press, 2002
- **DEUTSCH, C.V. ; JOURNEL, A.** Geostatistical Software Library and Users's Guide. Oxford University Press, 1998